# EUROPÄISCHE PATENTANMELDUNG

(11) **EP 1 067 668 A2**
(43) Veröffentlichungstag der Anmeldung: **10.01.2001**
(21) Anmeldenummer: 00109136.2
(22) Anmeldetag: 05.05.2000
(51) Int. Cl.: H02P 5/05

(54) **Schaltungsanordnung zum Betreiben eines elektromagnetischen Stellglieds**

(30) Priorität: 09.07.1999 DE 19931972
(71) Anmelder: WABCO GmbH & CO. OHG, 30453 Hannover (DE)
(72) Erfinder: Gudat, Wolfgang, 30926 Seelze (DE)
(74) Vertreter: Schrödter, Manfred

(57) **Zusammenfassung**

Es wird eine Schaltungsanordnung zum Betreiben eines elektromagnetischen Stellglieds, insbesondere eines als geschalteten Reluktanzmotor ausgebildeten Elektromotors, angegeben, bei der der Elektromotor auch bei Störungen oder Ausfall eines Teils der Energieversorgungslage zumindest in einer Art Notbetrieb weiter betrieben werden kann. Die Schaltungsanordnung weist vorzugsweise neben einer Hauptbatterie eine als Redundanz dienende Zusatzbatterie auf, die kleiner ist und eine geringere Nennspannung hat als die Hauptbatterie. Um bei Ausfall der Hauptbatterie den hinsichtlich seiner Nennspannung an die Nennspannung der Hauptbatterie angepaßten Elektromotor betätigen zu können, ist parallel zu den Batterien ein ein- und ausschaltbarer Kondensator vorgesehen, in den durch Ein- und Ausschalten des Stroms durch eine Erregerwicklung des Elektromotors nach Art eines Schaltreglers eine Energiemenge angesammelt werden kann, wobei die Spannung in dem Kondensator die Nennspannung der Zusatzbatterie dann übersteigt. Nach Ansammeln einer ausreichenden Energiemenge kann dann der Elektromotor kurzzeitig mittels der in dem Kondensator gespeicherten Energie betätigt werden. Bevorzugtes Anwendungsgebiet der Erfindung sind elektrisch betätigbare Bremsanlagen in Nutzfahrzeugen.

## Beschreibung

Die Erfindung betrifft eine Schaltungsanordnung zum Betreiben eines elektromagnetischen Stellglieds gemäß dem Oberbegriff des Patentanspruchs 1.

Eine gattungsgemäße Schaltungsanordnung ist aus der US 5,432,420 bekannt.

Die dortige Schaltungsanordnung dient zum Betreiben eines als Elektromotor ausgebildeten elektromagnetischen Stellglieds, insbesondere eines geschalteten Reluktanzmotors oder eines bürstenlosen Gleichstrommotors. Derartige Motoren weisen einen Stator mit mehreren Erregerwicklungen und einen darin angeordneten Rotor aus magnetischem oder magnetisierbaren Material auf. Durch sequentielles Beaufschlagen der Erregerwicklungen mit elektrischem Strom wird innerhalb des Stators ein Drehfeld erzeugt, welches den Rotor in Drehung versetzt. Um eine in der Praxis verwertbare Drehzahl des Rotors zu erreichen, müssen die Erregerwicklungen in relativ kurzen Zeitabständen mit Strom beaufschlagt werden. Da aufgrund des induktiven Verhaltens einer Erregerwicklung zunächst ein relativ langsamer Stromanstieg und daraufhin ein relativ langsamer Stromabfall erfolgt, ist der Betrieb derartiger Motoren ohne zusätzliche Maßnahmen relativ ineffizient.

Um einen effizienteren Betrieb zu ermöglichen, ist bei der eingangs erwähnten Schaltungsanordnung jede Erregerwicklung des Elektromotors mit einem als Energiespeicher dienenden Kondensator verbunden. Bei abgeschalteter Erregerwicklung erfolgt mittels zweier Dioden eine polrichtige Rückspeisung der in der Erregerwicklung in Form eines Stroms gespeicherten Energie in den jeweiligen Kondensator, so daß dort eine im Vergleich zur Nenn-Betriebsspannung der Schaltungsanordnung erhöhte Spannung aufgebaut wird. Beim nächstfolgenden Ansteuerschritt des Elektromotors wird diese in dem Kondensator gespeicherte Energie dann an die nächste mit Strom zu beaufschlagende Erregerwicklung zur Verbesserung des Wirkungsgrads des Elektromotors abgegeben.

Bei der Stromversorgung elektromagnetischer Stellglieder, wie z. B. einem Elektromotor oder einem elektromagnetisch betätigten Ventil, kann es vorkommen, daß eine zur Stromversorgung eingesetzte Batterie einen Defekt aufweist, z. B. einen elektrischen Kurzschluß zwischen den Elektroden der Batterie, und hierdurch eine geringere Spannung zur Verfügung stellt. Es ist auch möglich, daß die Batterie ganz ausfällt. Für solche Fälle kann insbesondere bei sicherheitsrelevanten Systemen, insbesondere bei Verwendung in einem Fahrzeug, eine Zusatzbatterie vorgesehen sein. Als Zusatzbatterie wird dann aus Kostengründen vorzugsweise eine relativ kleine Batterie mit relativ geringer Nennspannung eingesetzt.

Hierbei kann es vorkommen, daß das elektromagnetische Stellglied infolge der verringerten Betriebsspannung eine für die jeweilige Situation zu geringe Stellkraft erzeugt. Dies hätte bei einem sicherheitsrelevanten Systemen unter Umständen weitreichende, unerwünschte Folgen.

Der vorliegenden Erfindung liegt daher die Aufgabe zugrunde, eine Schaltungsanordnung zum Betreiben eines elektromagnetischen Stellglieds anzugeben, mittels der bei unzureichender Energieversorgung für das Stellglied dennoch eine für einen sicheren Betrieb ausreichende Stellkraft erzeugt werden kann.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Die Erfindung hat den Vorteil, daß im Vergleich zum Stand der Technik keine weiteren Bauteile wie z.B. eine gesonderte Induktivität erforderlich sind, so daß die Erfindung sehr preisgünstig auszuführen ist. Für das Sammeln des Energievorrats in dem Energiespeicher wird insbesondere keine zusätzliche Induktivität bzw. Spule benötigt, wie etwa bei einem aus der Stromversorgungstechnik bekannten Schaltregler, da bei der Erfindung direkt die Induktivität einer bzw. mehrerer Erregerwicklungen des elektromagnetischen Stellglieds verwendet wird.

Zum Sammeln eines erwünschten Energievorrats in dem Energiespeicher ist lediglich ein wechselweises Öffnen und Schließen der ersten und der zweiten Schaltmittel erforderlich. Mittels der Anzahl der Öffnungs- und Schließzyklen kann je nach Anwendungsfall der erwünschte Energievorrat aufgebaut und später an das Stellglied zur Erhöhung der Stellkraft abgegeben werden. Je nach Speicherkapazität des Energiespeichers und des Stellglieds und der Betriebsspannung der Energieversorgungseinrichtung können mehr oder weniger viele Öffnungs- und Schließzyklen erforderlich sein. Dies ist auf den speziellen Anwendungsfall hin abzustimmen.

Ein weiterer Vorteil ist, daß selbst bei einer im Vergleich zur normalen Betriebsspannung relativ stark verringerten Betriebsspannung noch ein Betrieb des Stellglieds ermöglicht wird, so daß das Stellglied noch eine Funktion ausführen kann, solange überhaupt noch eine Betriebsspannung vorliegt. Hierdurch wird ein besonders hohes Maß an Betriebssicherheit erreicht.

Bei Anwendung der Erfindung in Verbindung mit einer Energieversorgungseinrichtung mit mehreren als Energieabgabeeinrichtung dienenden Batterien, z. B. einer als Haupt-Energieabgabeeinrichtung dienenden Hauptbatterie und einer als Redundanz vorgesehenen Zusatzbatterie, kann als Zusatzbatterie eine relativ kleine Batterie mit im Vergleich zur Hauptbatterie wesentlich geringerer Spannung verwendet werden, wodurch die Energieversorgungseinrichtung relativ kostengünstig herzustellen ist.

Des weiteren kann die Erfindung auch vorteilhaft zur temporären Erhöhung der Stellkraft des Stellglieds eingesetzt werden, z. B. wenn kurzzeitig eine höhere Stellkraft erforderlich ist als durch den Betrieb des Stellglieds mit der normalen Betriebsspannung der Energieversorgungseinrichtung erreichbar ist.

In einer vorteilhaften Ausgestaltung der Erfindung wird für das stufenweise Sammeln des Energievorrats in dem Energiespeicher das erste Schaltmittel derart betätigt, daß das Stellglied im wesentlichen keine Stellbewegung ausführt. Dies kann je nach Stellglied beispielsweise durch eine relativ kurze Betätigung des ersten Schaltmittels oder bei anderes gearteten Stellgliedern auch durch ein gegebenenfalls auch längeres Einschalten einer oder mehrerer ganz bestimmter Erregerwicklungen des Stellglieds erreicht werden.

Wenn als Stellglied z. B. ein geschalteter Reluktanzmotor eingesetzt wird, so kann das erste Schaltmittel vorzugsweise derart betätigt werden, daß diejenige Erregerwicklung des Reluktanzmotors mit der Energieabgabeeinrichtung verbunden wird, deren Statorpole den Rotorpolen am nächsten stehen. In diesem Fall führt der Reluktanzmotor im wesentlichen keine Bewegung aus. Ein weiterer Vorteil hierbei ist, daß die zuvor genannte Erregerwicklung infolge der Stellung des Rotors die höchste Induktivität aller Erregerwicklungen des Reluktanzmotors aufweist, so daß das Sammeln des Energievorrats in dem Energiespeicher relativ schnell erfolgen kann.

Je nach Ausführungsart des Reluktanzmotors bzw. sonstigen Elektromotors kann es auch vorteilhaft sein, mehrere oder alle Erregerwicklungen gleichzeitig mit der Energieabgabeeinrichtung zu verbinden, um nach Öffnen des ersten Schaltmittels die Energiemengen aus mehreren oder allen Erregerwicklungen in dem Energiespeicher zu speichern und hierdurch das Sammeln des Energievorrats in dem Energiespeicher weiter zu beschleunigen.

Ein weiterer Vorteil der Erfindung besteht darin, daß bei Verwendung eines Elektromotors mit mehreren Erregerwicklungen nur ein einziger Energiespeicher, z. B. ein Kondensator, erforderlich ist. Hierdurch ist die Erfindung besonders kostengünstig auszuführen.

Anhand von Ausführungsbeispielen unter Verwendung von Zeichnungen werden im folgenden die Erfindung und ihre weiteren Vorteile näher erläutert.

Es zeigen:
- Fig. 1: ein elektrisches Schaltbild einer ersten Ausführungsform der Erfindung, welche für beliebige Arten von elektromagnetischen Stellgliedern geeignet ist, und
- Fig. 2: eine zweite Ausführungsform der Erfindung, welche für Gleichstrommotoren mit Kollektor als Stellglieder besonders vorteilhaft ist, und
- Fig. 3: einen Querschnitt durch einen geschalteten Reluktanzmotor in schematischer Darstellung und
- Fig. 4: eine dritte Ausführungsform der Erfindung, welche für einen geschalteten Reluktanzmotor als Stellglied besonders vorteilhaft ist, und
- Fig. 5: eine Variante der dritten Ausführungsform der Erfindung mit einem geschalteten Reluktanzmotor als Stellglied und
- Fig. 6: Spannungs-/Zeitdiagramme beim erfindungsgemäßen Betrieb der Ausführungsform gemaß Fig. 4.

In den Figuren werden gleiche Bezugszeichen für einander entsprechende Teile und Signale verwendet.

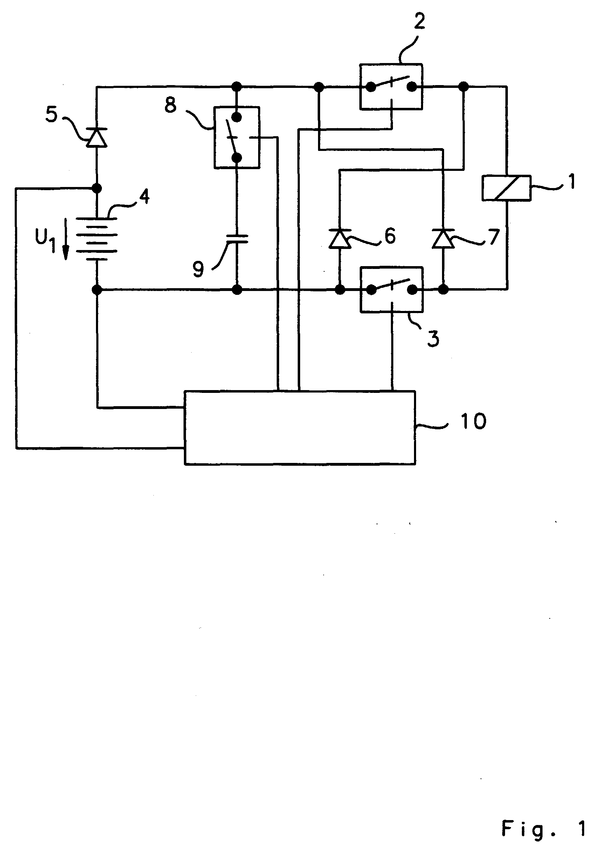

In der Fig. 1 ist eine erste Ausführungsform der Erfindung dargestellt, welche für beliebige Arten von elektromagnetischen Stellgliedern geeignet ist, wie beispielsweise Magnetventile, Relais oder Elektromotoren. Symbolisch für diese Arten von Stellgliedern ist in der Fig. 1 das elektromagnetische Stellglied (1) als Relaisspule dargestellt.

Das Stellglied (1) ist über ein erstes Schaltmittel (2, 3) mit der Energieversorgungseinrichtung (4, 5, 8, 9) verbindbar. Die Energieversorgungseinrichtung (4, 5, 8, 9) weist in dieser Ausführungsform eine Batterie (4), eine Diode (5), einen als zweites Schaltmittel dienenden Schalter (8) und einen als Energiespeicher dienenden Kondensator (9) auf. Die Batterie (4) und die Diode (5) dienen als Energieabgabeeinrichtung. Das erste Schaltmittel (2, 3) weist einen ersten Schalter (2) und einen zweiten Schalter (3) auf. Die Schalter (2, 3) symbolisieren geeignete elektrische oder elektronische Bauteile mit Schaltfunktion, wie z. B. Halbleiterschalter, vorzugsweise Feldeffekt-Transistoren. Es können jedoch auch beliebige andere Bauteile mit Schaltfunktion eingesetzt werden, die den beim jeweiligen Einsatzfall der Erfindung vorliegenden Anforderungen gerecht werden.

Mit dem Schalter (2) ist der Schalter (8) und die Kathode der Diode (5) verbunden. Zu dem Schalter (8) ist der Kondensator (9) in Reihe geschaltet. Zu der Diode (5) ist die eine Nennspannung (U₁) aufweisende Batterie (4) in Reihe geschaltet. Die Batterie (4) und der Kondensator (9) sind ihrerseits mit dem Schalter (3) verbunden.

Zur Überbrückung und zur Stromrichtungsumkehr bei geöffneten Schaltern (2, 3) ist eine aus zwei Dioden bestehende Energie-Rückspeisungsanordnung (6, 7) vorgesehen. Hierbei verbindet die Diode (7) den stellgliedseitigen Anschluß des Schalters (3) mit dem schaltungsseitigen Anschluß des Schalters (2) in Flußrichtung. Die Diode (6) verbindet den schaltungsseitigen Anschluß des Schalters (3) mit dem stellgliedseitigen Anschluß des Schalters (2) in Flußrichtung.

Die Energie-Rückspeisungsanordnung (6, 7) dient dabei zur Rückspeisung eines in dem elektromagnetischen Stellglied (1) gespeicherten Energievorrats in den Kondensator (9), wobei zwecks Beibehaltung der von der Batterie (4) festgelegten Polarität die Stromrichtung in den schaltungsseitigen, von den Schaltern (2, 3) zu dem Kondensator (9) führenden Leitungen im Vergleich zu der Stromrichtung bei eingeschalteten Schaltern (2, 3) umgekehrt wird.

Die Schalter (2, 3, 8) weisen einen Steueranschluß auf, über den mittels eines Steuersignals der jeweilige Schalter geöffnet oder geschlossen werden kann. Zur Erzeugung der Steuersignale für die Schalter (2, 3, 8) ist ein Steuermodul (10) vorgesehen, welches über Leitungen mit den Steuereingängen der Schalter (2, 3, 8) verbunden ist. Das Steuermodul (10) ist außerdem zur Stromversorgung mit der Batterie (4) verbunden.

Durch abwechselndes Ein- und Ausschalten des ersten Schaltmittels (2, 3) einerseits und des zweiten Schaltmittels (8) andererseits, wie dies anhand eines Zeitdiagramms im folgenden noch näher erläutert werden soll, kann bei der Schaltungsanordnung gemäß Fig. 1 in dem Kondensator (9) eine Ladungs- bzw. Energiemenge angesammelt und bei Bedarf an das Stellglied (1) abgegeben werden. Sobald die Schalter (2, 3) des ersten Schaltmittels infolge von Steuersignalen des Steuermoduls (10) geschlossen werden, fließt ein Strom von der Batterie (4) über die hierbei in Flußrichtung wirkende Diode (5) durch den Schalter (2), das Stellglied (1) und den Schalter (3). Sofern in dem Kondensator (9) noch keine Energie gespeichert ist, betätigt das Steuermodul (10) hierbei auch den Schalter (8), so daß der Kondensator (9) auf die um die Diodenflußspannung der Diode (5) verminderte Batteriespannung (U₁) aufgeladen wird. Sodann werden die Schalter (2, 3) geöffnet. Die in dem Stellglied (1) infolge der Induktivität des Stellglieds gespeicherte Energiemenge (0,5 · Induktivität · Strom²) fließt nun über die Dioden (6, 7) in die auf der dem Stellglied (1) abgewandten Seite der Schaltung ab. Die nun in Sperrichtung wirkende Diode (5) verhindert einen Stromfluß in die Batterie (4). Die abfließende Energiemenge fließt daher über den geschlossenen Schalter (8) in den Kondensator (9), der diese Energiemenge speichert.

Daraufhin wird der Schalter (8) geöffnet und die Schalter (2, 3) geschlossen. Hierdurch baut sich erneut ein Stromfluß durch das Stellglied (1) auf, wodurch wiederum nach Abschalten der Schalter (2, 3) eine gespeicherte Energiemenge über die Dioden (6, 7) abfließen kann. Nach Öffnen der Schalter (2, 3) wird sofort der Schalter (8) geschlossen, so daß diese Energiemenge wiederum in dem Kondensator (9) gespeichert werden kann.

Wenn in dem Kondensator (9) dann eine ausreichende Energiemenge gespeichert ist, kann sie durch gleichzeitiges Schließen der Schalter (2, 3, 8) an das Stellglied (1) zur Erhöhung der Stellkraft abgegeben werden.

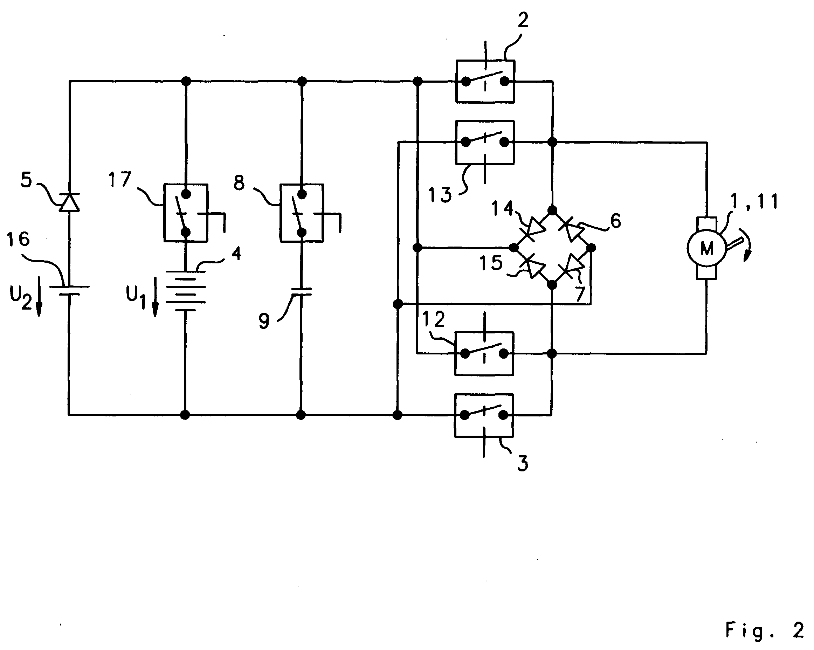

In der Fig. 2 ist eine zweite Ausführungsform der Erfindung dargestellt, die sich besonders für die Verwendung von Gleichstrommotoren mit Kollektor als Stellglied eignet, wobei der Gleichstrommotor in beiden Drehrichtungen betrieben werden kann.

Das anhand der Fig. 1 bereits beschriebene erste Schaltmittel besteht in dieser zweiten Ausführungsform aus vier Schaltern (2, 3, 12, 13). Hierbei sind die Schalter (2, 3) in analoger Weise wie in der Fig. 1 angeordnet. Die Schalter (12, 13) dienen zur Umkehrung der Spannungspolarität an dem in dieser Ausführungsform als Gleichstrommotor (11) ausgebildeten Stellglied (1). Es werden daher je nach gewünschter Drehrichtung des Gleichstrommotors (11) entweder die Schalter (2, 3) oder die Schalter (12, 13) eingeschaltet.

Die in der Fig. 1 aus den Dioden (6, 7) bestehende Energie-Rückspeisungsanordnung weist in der Ausführungsform gemäß Fig. 2 zwei weitere Dioden (14, 15) auf. Die vier Dioden (6, 7, 14, 15) der Energie-Ruckspeisungsanordnung sind hierbei nach Art eines Brückengleichrichters angeordnet, derart, daß unabhängig von der Spannungspolarität an dem Gleichstrommotor (11) eine nach Öffnen der Schalter (2, 3, 12, 13) abfließende Energiemenge mit der der Batterie (4) entsprechenden Polarität dem Kondensator (9) zugeführt wird.

Die anhand der Fig. 1 bereits beschriebene Energieversorgungseinrichtung (4, 5, 8, 9) weist bei dieser Ausführungsform der Erfindung außerdem eine Zusatz-Energieabgabeeinrichtung (5, 16) auf, die von einer Batterie (16) und der Diode (5) gebildet wird. Der in dieser Ausführungsform einer Haupt-Energieabgabeeinrichtung (4, 17) zuzuordnende Batterie (4) ist ein als weiteres Schaltmittel dienender Schalter (17) vorgeschaltet. Die Batterie (4) ist über den Schalter (17) mit dem ersten Schaltmittel (2, 3, 12, 13) verbindbar.

Die Batterie (16) ist von kleinerer Bauart und somit kostengünstiger als die Batterie (4). Aus diesem Grund weist die Batterie (16) eine geringere Nennspannung (U₂) auf als die Batterie (4).

Die Schalter (2, 3, 8, 12, 13, 17) sind mit einem in der Fig. 2 der besseren Übersichtlichkeit halber nicht dargestellten Steuermodul in analoger Weise wie in der Fig. 1 verbunden.

Die zusätzliche Batterie (16) dient als redundante Energiequelle für den Fall eines Defekts oder Ausfalls der Batterie (4). In einem bevorzugten Betriebsmodus der Schaltungsanordnung gemäß Fig. 2 wird bei fehlerfreiem Betrieb der Batterie (4) der Elektromotor (11), dessen Nennspannung vorzugsweise an die Nennspannung (U₁) der Batterie (4) angepaßt ist, ausschließlich aus der Batterie (4) versorgt. Die Schalter (8, 17) sind in diesem Betriebszustand ständig geschlossen.

Wenn festgestellt wird, daß die Batterie (4) defekt ist, d. h. wenn die Batterie (4) keine ausreichende Energie mehr abgeben kann, dann wird sie durch Öffnen des Schalters (17) von der übrigen Schaltungsanordnung abgetrennt. Sodann wird durch wechselweises Ein- und Ausschalten der Schalter (2, 3 bzw. 12, 13) einerseits und des Schalters (8) andererseits in der zuvor schon beschriebenen Weise eine Energiemenge in dem Kondensator (9) angesammelt. Hierbei dient die Diode (5) dazu, ein Abfließen der Energie in die Batterie (16) zu verhindern. Ein Energierückfluß in die defekte Batterie (4) wird durch den geöffneten Schalter (17) verhindert. Statt der Diode (5) könnte daher auch ein weiterer steuerbarer Schalter eingesetzt werden, der synchron zu den Schaltern (2, 3 bzw. 12, 13) zu betätigen wäre.

Wenn die sich aufgrund der angesammelten Energiemenge in dem Kondensator (9) ergebende Spannung, welche in nicht dargestellter Weise in dem Steuermodul (10) gemessen und ausgewertet wird, an diesem Kondensator einen für eine Betätigung des Gleichstrommotors (11) ausreichenden Wert aufweist, wird durch Schließen der Schalter (2, 3, 8 bzw. 8, 12, 13) die Energiemenge bzw. die Energie aus dem Kondensator an den Gleichstrommotor (11) abgegeben, der hierdurch eine Bewegung ausführt. Der Schalter (17) ist hierbei weiterhin permanent geöffnet. Nach Abgabe der Energie von dem Kondensator (9) an den Gleichstrommotor (11) beginnt der Vorgang des Energiesammelns in dem Kondensator (9) erneut.

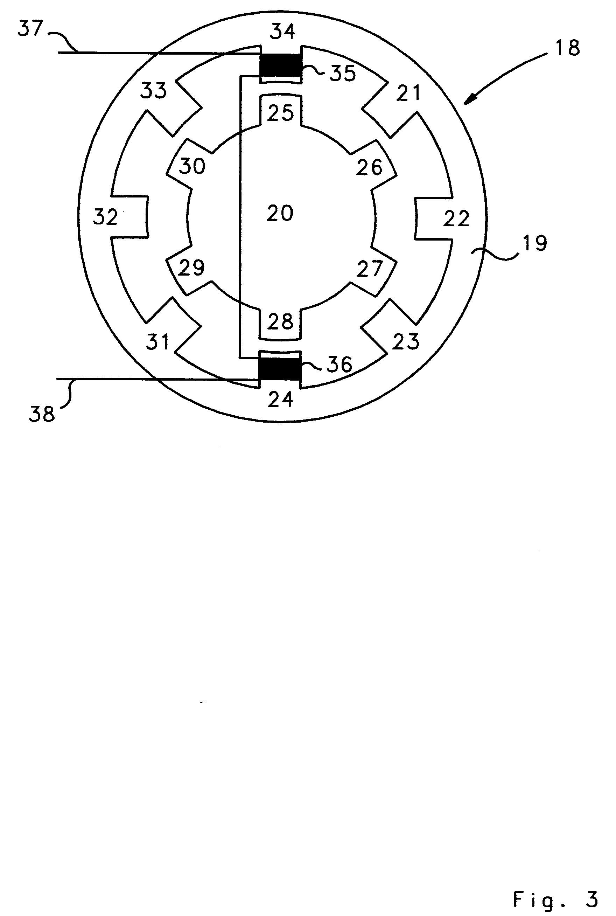

In der Fig. 3 ist ein Querschnitt durch einen geschalteten Reluktanzmotor (18) schematisch dargestellt. Der Reluktanzmotor (18) weist acht gleichmäßig über den Umfang der Innenseite eines Stators (19) verteilte Statorpole (21, 22, 23, 24, 31, 32, 33, 34) sowie sechs über den Außenumfang eines in dem Stator (19) angeordneten Rotors (20) gleichmäßig verteilte Rotorpole (25, 26, 27, 28, 29, 30) auf. Der Rotor (20) ist mechanisch mit der Abtriebswelle des Reluktanzmotors (18) verbunden.

Die einander gegenüberliegenden Statorpole sind einander jeweils paarweise zugeordnet, und zwar in folgenden Paaren: (21) und (31), (22) und (32), (23) und (33), (24) und (34). An jedem Statorpol ist eine elektrische Spulenwicklung angeordnet. Die Spulenwicklungen zweier ein Paar bildenden Statorpole bilden eine Erregerwicklung. Die Spulenwicklungen einer Erregerwicklung sind miteinander derart verbunden, daß bei Bestromung der Erregerwicklung ein in beiden zu einem Paar gehörenden Statorpolen gleichsinniger magnetischer Fluß erzeugt wird. Die Verbindung zweier Spulenwicklungen (35, 36) zu einer Erregerwicklung ist in der Fig. 3 beispielhaft anhand der Statorpole (24, 34) dargestellt. Der Statorpol (24) ist hierbei mit der Spule (36) versehen, der Statorpol (34) ist mit der Spule (35) versehen. Als elektrische Zuleitungen zu der Erregerwicklung (35, 36) sind die Anschlußleitungen (37, 38) vorgesehen. Zur Vereinfachung sind in der Fig. 3 die Spulen an den übrigen Statorpolen nicht dargestellt.

Durch Bestromung einer Erregerwicklung, z. B. der Erregerwicklung an den Statorpolen (21, 31) kann der Rotor (20) ausgehend von der in der Fig. 3 dargestellten Stellung um ein Vierundzwanzigstel eines Kreises schrittweise weiter bewegt werden, d. h. bei dem Beispiel gemäß Fig. 3 bis zu einer Stellung, bei der der Statorpol (21) mit dem Rotorpol (26) fluchtet und der Statorpol (31) mit dem Rotorpol (29) fluchtet. Durch sequentielle Bestromung der weiteren Spulen kann der Rotor (20) dann um jeweils einen weiteren Schritt, d. h. um ein Vierundzwanzigstel eines Kreises, weiterbewegt werden.

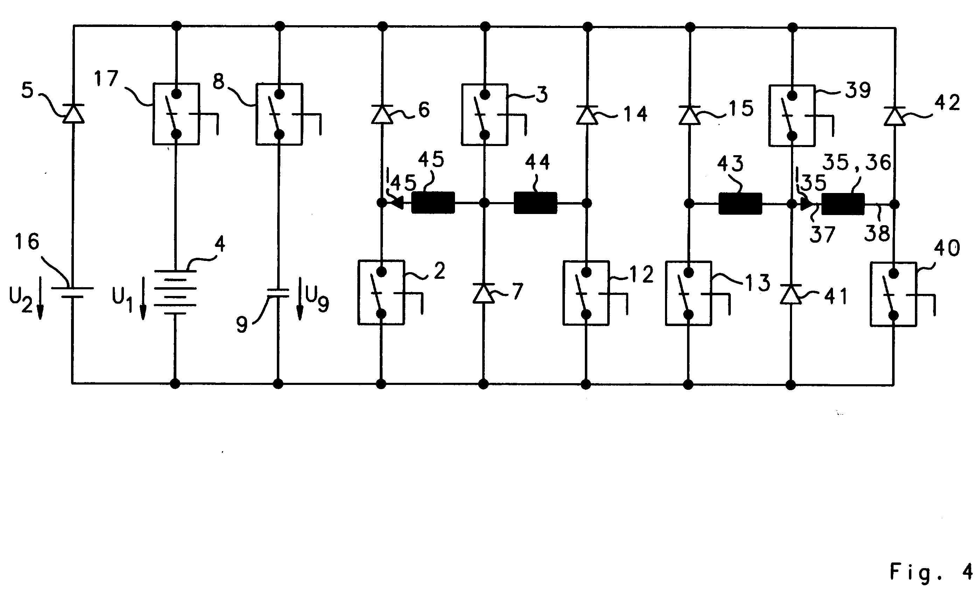

In der Fig. 4 ist eine dritte Ausführungsform der Erfindung dargestellt, welche für den anhand der Fig. 3 erläuterten geschalteten Reluktanzmotor (18) besonders vorteilhaft ist. In der Fig. 4 sind von dem Reluktanzmotor (18) nur die Erregerwicklungen der Statorpole (21, 22, 23, 24, 31, 32, 33, 34) sowie die Anschlußleitungen (37, 38) dargestellt. Die Erregerwicklungen sind hierbei zur Vereinfachung als einzelne Spulen bzw. Erregerwicklungen (35/36, 43, 44, 45) dargestellt.

Neben den bereits anhand der Figuren 1 und 2 erläuterten Teilen (4, 5, 8, 9, 16, 17) sind in dieser Ausführungsform der Erfindung die das erste Schaltmittel bildenden Schalter (2, 3, 12, 13, 39, 40) und die die Energie-Rückspeisungsanordnung bildenden Dioden (6, 7, 14, 15, 41, 42) in besonders vorteilhafter Weise angeordnet, so daß der Aufwand an Bauteilen im Verhältnis zu der Komplexität des hier verwendeten Stellglieds (1, 18) relativ gering ist. Insbesondere sind nicht für jede Erregerwicklung (35, 36, 43, 44, 45) jeweils zwei Schalter und zwei Dioden erforderlich.

Je nach aktueller Stellung des Rotors (20) und gewünschter Drehrichtung des Reluktanzmotors (18) werden jeweils zwei Schalter des ersten Schaltmittels (2, 3, 12, 13, 39, 40) paarweise betätigt, um hierdurch jeweils eine der Erregerwicklungen (35, 36, 43, 44, 45) zu bestromen. Für eine Bestromung der Erregerwicklung (35, 36) sind beispielsweise die Schalter (39, 40) einzuschalten. Hierdurch wird dann ein Strom (I₃₅) hervorgerufen. Um einen Bewegungsschritt des Reluktanzmotors (18) von der in der Fig. 3 dargestellten Stellung entgegen dem Uhrzeigersinn zu bewirken, müssen die Schalter (2, 3) betätigt werden, was einen Stromfluß (I₄₅) durch die Erregerwicklung (45) hervorruft.

Solange die Batterie (4) keinen Defekt aufweist, sind die Schalter (8, 17) geschlossen. Falls ein Defekt an der Batterie (4) auftritt, wird der Schalter (17) permanent geöffnet. Sodann wird die zuvor schon beschriebene Verfahrensweise zum Sammeln einer Energiemenge in dem Kondensator (9) und deren Abgabe an das Stellglied (18) angewandt.

Wenn hierbei zunächst die Schalter (39, 40) geschlossen werden, fließt nach dem Öffnen dieser Schalter die in der Erregerwicklung (35, 36) gespeicherte Energiemenge über die Dioden (41, 42) über den dann geschlossenen Schalter (8) in den Kondensator (9) ab. Der Schalter (17) ist hierbei, wie erwähnt, geöffnet. Nach Erreichen einer für einen Bewegungsschritt des Reluktanzmotors (18) ausreichenden Energiemenge in dem Kondensator (9) wird diese Energiemenge beispielsweise an die Erregerwicklung (45) abgegeben, wofür die Schalter (2, 3, 8) zu schließen wären. Nach Beendigung des Bewegungsschritts werden dann die Schalter (2, 3) geöffnet, wodurch die in der Erregerwicklung (45) gespeicherte Energiemenge dann über die Dioden (6, 7) wiederum in den Kondensator (9) abfließt.

In einer bevorzugten Ausgestaltung der Erfindung wird bei Ausfall der Batterie (4) zum Sammeln einer für eine Motorbewegung erforderlichen Energiemenge in dem Kondensator (9) immer diejenige Erregerwicklung des Reluktanzmotors (18) mit Strom beaufschlagt, bei welcher die Statorpole wenigstens annähernd mit den Rotorpolen fluchten. Dies hat zum einen den Vorteil, daß die Induktivität dieser Erregerwicklung besonders hoch ist und somit eine besonders hohe Energiemenge darin gespeichert werden kann. Ein weiterer Vorteil ist, daß der Reluktanzmotor (18) während des Sammelns der Energiemenge in dem Kondensator (9) nicht unbeabsichtigt in Bewegung gesetzt wird.

In einer weiteren vorteilhaften Ausgestaltung der Erfindung werden zwecks Ausnutzung einer möglichst hohen Induktivität und somit einer möglichst hohen Energiespeicherkapazität in den Spulen alle Erregerwicklungen (35, 36, 43, 44, 45) gleichzeitig mit Strom beaufschlagt, d. h. es werden sämtliche Schalter (2, 3, 12, 13, 39, 40) des ersten Schaltmittels geschlossen. Hierdurch wird ebenfalls eine unbeabsichtigte Bewegung des Reluktanzmotors (18) vermieden. Nach Öffnen der Schalter (2, 3, 12, 13, 17, 39, 40) und Schließen des Schalters (8) können dann die in den Erregerwicklungen (35, 36, 43, 44, 45) gespeicherten Energiemengen in dem Kondensator (9) gespeichert werden.

Ebenso wie in der Fig. 2 sind auch in der Fig. 4 das Steuermodul sowie die Verbindungsleitungen von dem Steuermodul zu den Steuereingängen der Schalter (2, 3, 8, 12, 13, 17, 39, 40) nicht dargestellt.

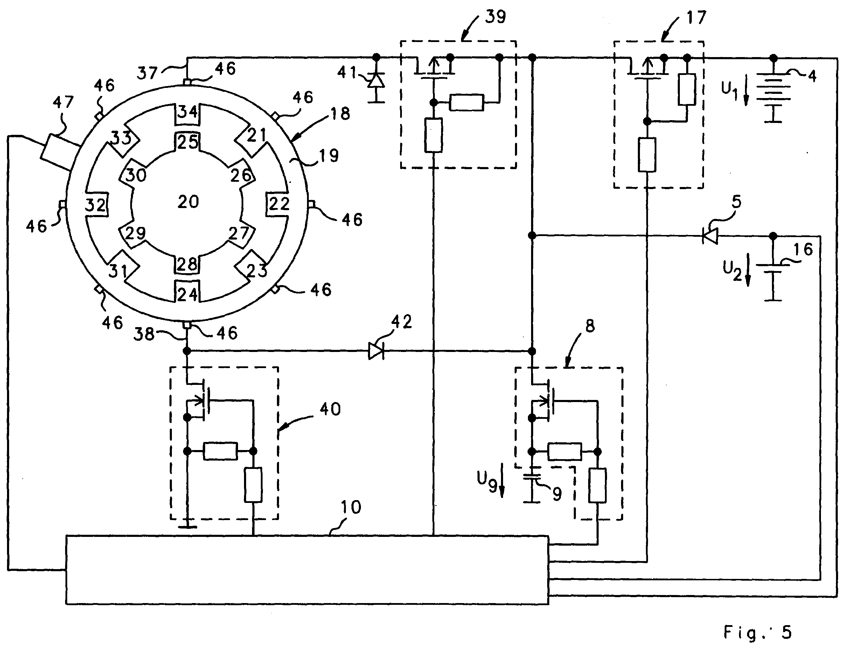

In der Fig. 5 ist eine bevorzugte Variante der in der Fig. 4 dargestellten dritten Ausführungsform der Erfindung mit einem geschalteten Reluktanzmotor (18) als Stellglied dargestellt, wobei neben dem Steuermodul (10) hier auch eine vorteilhafte schaltungstechnische Ausführung der zuvor als Schalter (2, 3, 8, 12, 13, 17, 39, 40) angegebenen Bauteile angegeben ist. Der Einfachheit halber ist in der Fig. 5 nur die Beschaltung der in der Fig. 5 nicht dargestellten Erregerwicklung (35, 36), wie in den Figuren 3 und 4 bereits dargestellt, im einzelnen angegeben. Die Erregerwicklung (35, 36) kann über die Anschlußleitungen (37, 38), die mit Anschlußkontakten (46) des Reluktanzmotors (18) verbunden sind, mit Strom beaufschlagt werden. Über weitere Anschlußkontakte (46) sind die weiteren Erregerwicklungen (43, 44, 45) mit weiteren Anschlußleitungen verbunden (Erregerwicklungen und Anschlußleitungen sind ebenfalls nicht dargestellt).

Die in der Fig. 5 dargestellten Schalter (8, 17, 39, 40) bestehen jeweils aus einem Feldeffekt-Transistor mit einem Vorwiderstand am Gate-Anschluß sowie einem Überbrückungswiderstand zwischen dem jeweiligen Gate-Anschluß und dem jeweiligen Source-Anschluß. Der Überbrückungswiderstand dient dazu, einen definierten Schaltzustand des Feldeffekt-Transistors sicherzustellen, falls von dem Steuermodul (10) ein hochohmiges Signal an den Gate-Vorwiderstand abgegeben wird.

Des weiteren ist in der Fig. 5 an dem Stator (19) des Reluktanzmotors (18) ein Positionssensor (47) angeordnet, der mit dem Steuermodul (10) verbunden ist. Anhand des Signals des Positionssensors (47) kann das Steuermodul (10) erkennen, in welcher Winkelposition sich der Rotor (20) befindet und infolgedessen eine geeignete Erregerwicklung für den nächsten Bewegungsschritt des Rotors (20) ermitteln.

Im übrigen entspricht die Schaltungsanordnung gemäß Fig. 5 der Darstellung gemäß Fig. 4.

Eine geeignete Dimensionierung des Kondensators (9) beträgt etwa 1000 bis 5000 µF.

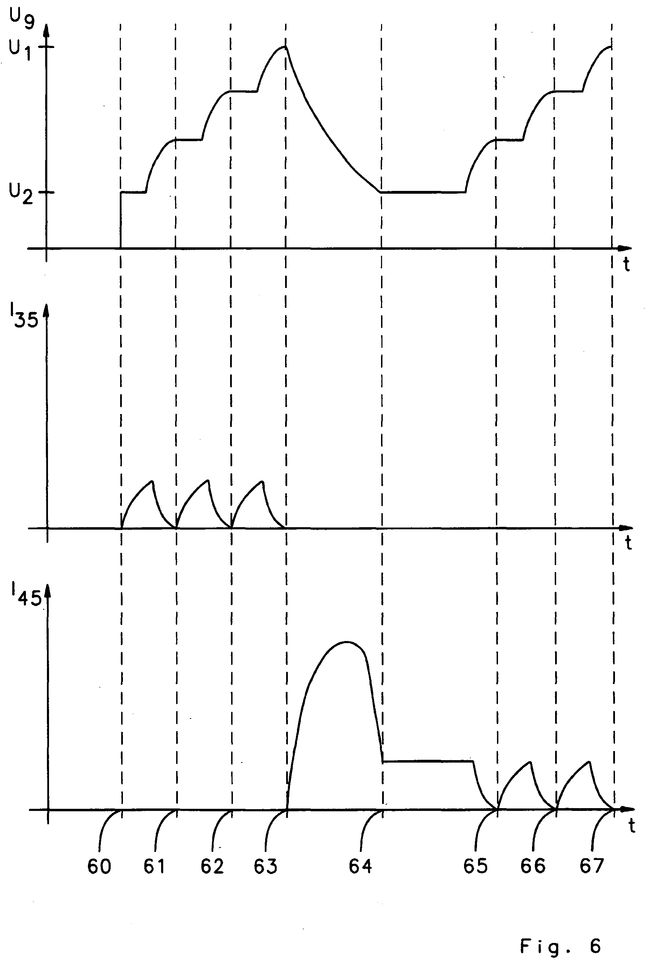

In der Fig. 6 sind ein Spannungs-Zeitdiagramm und zwei Strom-Zeitdiagramme beim erfindungsgemäßen Betrieb der dritten Ausführungsform der Erfindung, wie anhand der Figuren 4 und 5 bereits erläutert, dargestellt. Die senkrechten gestrichelten Linien stellen einen Zeitbezug zwischen bestimmten Zeitpunkten (60, 61, 62, 63, 64, 65, 66, 67) in den einzelnen Diagrammen her. In den Diagrammen ist der Verlauf der dort angegebenen Signale für den Fall des Ausfalls der Batterie (4) angegeben, d. h. es steht zur Versorgung der Schaltungsanordnung nur die Batterie (16) mit der im Vergleich zu der Nennspannung (U₁) der Batterie (4) relativ geringen Nennspannung (U₂) zur Verfügung. Der Schalter (17) ist hierbei permanent geöffnet, um unerwünschte Auswirkungen der defekten Batterie (4) auf die übrige Schaltungsanordnung zu vermeiden.

In dem oberen Diagramm ist die Spannung (U₉) an dem Kondensator (9) dargestellt. In dem mittleren Diagramm ist der Strom (I₃₅) durch die Erregerwicklung (35, 36) dargestellt. In dem unteren Diagramm ist der Strom (I₄₅) durch die Erregerwicklung (45) dargestellt.

Der nachfolgend beschriebene Vorgang beginnt zu dem Zeitpunkt (60), zu dem die Schalter (8, 39, 40) geschlossen werden. Hierdurch steigt zum einen die Spannung (U₉) an dem Kondensator (9) sprunghaft auf die Spannung (U₂) der Batterie (16) an. Außerdem steigt der Strom (I₃₅) gemaß einer Exponentialfunktion allmählich an. Nach einer bestimmten Zeit, in diesem Fall in der Mitte des Zeitraums zwischen den Zeitpunkten (60, 61), werden dann die Schalter (39, 40) geöffnet, während der Schalter (8) geschlossen bleibt. Der Zeitpunkt hierfür wird vorteilhafterweise derart festgelegt, daß der Stromanstieg des Stroms (I₃₅) kurz vor oder bereits in dem abflachenden Ast der Exponentialfunktion liegt. Durch das Abschalten der Schalter (39, 40) verringert sich der Strom (I₃₅) gemäß einer Exponentialfunktion. Die hierbei über die Dioden (41, 42) an den Kondensator (9) abgegebene Energiemenge führt zu einem Anstieg der dortigen Spannung (U₉), welche ebenfalls gemäß einer Exponentialfunktion verläuft. Zu dem Zeitpunkt (61) hat sich der Strom (I₃₅) im wesentlichen bis auf den Wert Null abgebaut. Der zuvor beschriebene Vorgang wird sodann durch erneutes Einschalten der Schalter (39, 40) wiederholt, wobei nun der Schalter (8) geöffnet wird, um einen Abbau der bereits erhöhten Spannung (U₉) in dem Kondensator (9) zu vermeiden. Etwa in der Mitte des Zeitraums zwischen den Zeitpunkten (61, 62) werden dann die Schalter (39, 40) wiederum geöffnet und der Schalter (8) zeitgleich geschlossen. Hierdurch wird ein weiterer Anstieg der Spannung (U₉) an dem Kondensator (9) bewirkt.

Der zuvor beschriebene Vorgang wird nun mehrere Male wiederholt, bis die Spannung (U₉) einen für eine Betätigung des Reluktanzmotors (18) ausreichenden Wert aufweist. Dieser Wert ist in der Fig. 6 mit der Spannung (U₁) bezeichnet. In der Darstellung gemäß der Fig. 6 ist lediglich eine weitere Wiederholung des Umschaltens der Schalter (8, 39, 40) dargestellt, d.h. es erfolgt eine Erhöhung der Kondensatorspannung in drei Stufen. Je nach Auslegung des Reluktanzmotors (18) und des Kondensators (9) können mehr oder auch weniger Umschaltvorgänge als in der Fig. 6 dargestellt notwendig sein, um den erwünschten Spannungswert an dem Kondensator (9) zu erreichen.

Zu dem Zeitpunkt (63) wird dann die in dem Kondensator (9) angesammelte Energiemenge dem Reluktanzmotor (18) zugeführt, um hierdurch einen Bewegungschritt des Rotors (20) hervorzurufen. Hierbei wird die Erregerwicklung (45) mit der Kondensatorspannung (U₉) beaufschlagt, indem bei geöffnetem Schalter (17) simultan die Schalter (8, 2, 3) geschlossen werden. Hierdurch baut sich ein Strom (I₄₅) in der Erregerwicklung (45) auf, wobei der Kondensator (9) entladen wird. Der Strom (I₄₅) steigt zunächst an und klingt nach Erreichen eines Maximums wieder ab. Die Spannung (U₉) verringert sich zwischen den Zeitpunkten (63, 54) nach Art einer Exponentialfunktion. Ab dem Zeitpunkt (64), zu dem die Spannung (U₉) auf den Wert (U₂) abgeklungen ist, wird die Spannung (U₉) auf diesem Wert (U₂) gehalten, da der Strom (I₄₅) von diesem Zeitpunkt an wieder der Batterie (16) entnommen wird. Der Strom (I₄₅) verharrt daher ab dem Zeitpunkt (64) auf einem durch die Spannung (U₂) und dem ohmschen Anteil der Erregerwicklung (45) hervorgerufenen Niveau.

Durch die erwähnte Unterstützung durch die Batterie (16) ab dem Zeitpunkt (64) kann eine infolge der zunächst relativ hohen Kondensatorspannung (U₉) initiierte Bewegung des Rotors (20) fortgesetzt werden, bis ein Bewegungsschritt des Rotors (20) beendet ist, d. h. bis in dem vorliegenden Fall die Statorpole (21, 31) mit den Rotorpolen (26, 29) fluchten. Mittels der Kondensatorspannung (U₉) wird somit nur ein Anfangsdrehmoment des Rotors (20) erzeugt. Ein Vorteil hierbei ist, daß ein relativ kleiner und preiswerter Kondensator mit verhältnismäßig geringer Kapazität verwendet werden kann. Ein weiterer Vorteil eines Kondensators mit geringer Kapazität besteht darin, daß nur relativ wenige Betätigungsschritte der Schalter erforderlich sind, um eine ausreichende Spannung an dem Kondensator (9) zu erreichen.

Ein weiterer Vorteil ist, daß bei eingeschaltetem Schalter (8) die Kondensatorspannung (U₉) auf dem Wert (U₂) gehalten werden kann und somit nicht bis auf den Wert Null abfällt.

Kurz vor dem Zeitpunkt (65) werden dann die Schalter (2, 3) gleichzeitig geöffnet, was zu einer Verringerung des Stroms (I₄₅) und einer sich infolge des Energieausgleichs über die Dioden (6, 7) erhöhenden Kondensatorspannung (U₉) führt. Wenn der Vorgang des Energieausgleich zu dem Zeitpunkt (65) abgeschlossen ist, werden zwischen den Zeitpunkten (65, 66) bzw. (66, 67) erneut zwei Schaltschritte zur Erhöhung der Spannung (U₉) an dem Kondensator (9) durchgeführt. Hierbei werden die Schalter (2, 3) und (8) in analoger Weise wie zuvor für die Zeitpunkte (60, 61, 62, 63) erläutert wechselweise betätigt.

Die für den Fall einer funktionsfähigen Batterie (4) schon beschriebene bevorzugte Betriebsart der dritten Ausführungsform der Erfindung kann durch einen Testmodus zum Testen der zusätzlichen Batterie (16), der Diode (5) sowie der zum Sammeln des Energievorrats diendenden Schaltungsteile (2, 3, 6, 7, 8, 9, 12, 13, 14, 15, 39, 40, 41, 42) vorteilhaft erweitert werden. Da die Batterie (16) als Redundanz für den Fall eines Defekts der Batterie (4) vorgesehen ist, wird die Batterie (16) in dem Normalfall einer funktionsfähigen Batterie (4) nicht benutzt, so daß ohne weitere Maßnahmen nicht sichergestellt werden kann, daß die Batterie (16) ihrerseits funktionsfähig ist, wenn sie zum Einsatz kommen soll. Bei Einsatz der Erfindung in einem sicherheitskritischen System, z. B. einer Bremsanlage für ein Fahrzeug, ist es aus Gründen der Betriebssicherheit aber erforderlich, einen Defekt an der Batterie (16) zu erkennen und anzuzeigen.

Ein bevorzugter Testmodus zur Überprüfung der Batterie (16) umfaßt folgende Schritte:
- In einer Zeitphase, in der der Reluktanzmotor (18) keine Stellbewegung ausführen muß, wird der Schalter (17) geöffnet.
- Die in dem Kondensator (9) gespeicherte Energiemenge wird derjenigen Erregerwicklung des Reluktanzmotors (18) durch Schließen der entsprechenden Schalter des ersten Schaltmittels (2, 3, 12, 13, 39, 40) zugeführt, deren Statorpole wenigstens annähernd mit den Rotorpolen fluchten. Hierbei führt der Rotor (20) dann im wesentlichen keine Bewegung aus, und die in dem Kondensator (9) gespeicherte Energiemenge wird in Wärme umgesetzt.
- Wenn die Kondensatorspannung (U₉) auf den Spannungswert (U₂) abgefallen ist, wird durch wechselweises Öffnen und Schließen der ersten (2, 3, 12, 13, 39, 40) und der zweiten (8) Schaltmittel stufenweise ein Energievorrat in dem Kondensator (9) gesammelt. Hierbei erhöht sich die Kondensatorspannung (U₉), wie auch in der Fig. 6 dargestellt.
- Wenn die Kondensatorspannung (U₉) nach einer vorgegebenen Zeitspanne wenigstens einen vorgegebenen Spannungswert, beispielsweise den Spannungswert (U₁), erreicht hat, kann die Batterie (16) als funktionsfähig angesehen werden. Anderenfalls ist die Batterie (16) defekt, was z. B. mittels einer Warnlampe angezeigt werden kann.
- Sodann wird der Schalter (17) wieder geschlossen.

Die Kondensatorspannung (U₉) wird hierbei vorzugsweise von dem Steuermodul (10) überwacht.

## Patentansprüche

1. Schaltungsanordnung zum Betreiben eines elektromagnetischen Stellglieds (1, 11, 18), einem ersten Schaltmittel (2, 3, 12, 13, 39, 40), über das das Stellglied (1, 11, 18) mit einer elektrischen Energieversorgungseinrichtung (4, 5, 8, 9, 16, 17) verbindbar ist, und mit einer zwischen der Energieversorgungseinrichtung (4, 5, 8, 9, 16, 17) und dem Stellglied (1, 11, 18) angeordneten Energie-Rückspeisungsanordnung (6, 7, 14, 15, 41, 42), welche eine nach dem Öffnen des ersten Schaltmittels (2, 3, 12, 13, 39, 40) in dem Stellglied (1, 11, 18) gespeicherte Energiemenge in die Energieversorgungseinrichtung (4, 5, 8, 9, 16, 17) zurückspeist, wobei die Energieversorgungseinrichtung (4, 5, 8, 9, 16, 17) wenigstens eine Energieabgabeeinrichtung (4, 5, 16, 17) und wenigstens einen zur Energieabgabe und Energieaufnahme geeigneten Energiespeicher (9) sowie ein zweites Schaltmittel (8) aufweist, über das der Energiespeicher (9) mit der EnergieRückspeisungsanordnung (6, 7, 14, 15, 41, 42) verbindbar ist, dadurch gekennzeichnet, daß durch wechselweises Öffnen und Schließen der ersten (2, 3, 12, 13, 39, 40) und der zweiten (8) Schaltmittel stufenweise ein erwünschter Energievorrat in dem Energiespeicher (9) gesammelt wird.

2. Anordnung nach Anspruch 1, dadurch gekennzeichnet, daß der in dem Energiespeicher (9) gesammelte Energievorrat bei Bedarf an das Stellglied (1, 11, 18) abgebbar ist.

3. Anordnung und Verfahren nach einem der vorhergehenden Ansprüche, dadurch gekennzeichnet, daß das stufenweise Sammeln eines Energievorrats in dem Energiespeicher (9) vorgenommen wird, wenn das Stellglied (1, 11, 18) bei Verbindung mit der Energieabgabeeinrichtung (4, 5, 16, 17) eine Stellkraft erzeugt, die unterhalb eines erwünschten Wertes liegt.

4. Anordnung und Verfahren nach einem der vorhergehenden Ansprüche, dadurch gekennzeichnet, daß für das stufenweise Sammeln des Energievorrats in dem Energiespeicher (9) das erste Schaltmittel (2, 3, 12, 13, 39, 40) derart betätigt wird, daß das Stellglied (1, 11, 18) im wesentlichen keine Stellbewegung ausführt.

5. Anordnung und Verfahren nach einem der vorhergehenden Ansprüche, dadurch gekennzeichnet, daß die Energieabgabeeinrichtung (4, 5, 16, 17) eine Haupt-Energieabgabeeinrichtung (4, 17) und eine parallel dazu angeordnete Zusatz-Energieabgabeeinrichtung (5, 16) aufweist.

6. Anordnung und Verfahren nach Anspruch 5, dadurch gekennzeichnet, daß das stufenweise Sammeln des Energievorrats in dem Energiespeicher (9) bei einer Betriebsstörung oder einem Ausfall der Haupt-Energieabgabeeinrichtung (4, 17) vorgenommen wird.

7. Anordnung und Verfahren nach einem der Ansprüche 5 oder 6, dadurch gekennzeichnet, daß die Haupt-Energieabgabeeinrichtung (4, 17) und/oder die ZusatzEnergieabgabeeinrichtung (5, 16) ausschließlich zur Abgabe und nicht zur Aufnahme von elektrischer Energie geeignet ist.

8. Anordnung und Verfahren nach einem der Ansprüche 5 bis 7, dadurch gekennzeichnet, daß die Haupt-Energieabgabeeinrichtung (4, 17) und/oder die Zusatz-Energieabgabeeinrichtung (5, 16) eine Energiequelle (4 bzw. 16), insbesondere eine wiederaufladbare Batterie, aufweist, zu der ein den Strom nur in Richtung zu der Energie-Ruckspeisungsanordnung durchlassendes Bauteil, insbesondere eine Diode (5), in Reihe geschaltet ist.

9. Anordnung und Verfahren nach einem der Ansprüche 5 bis 8, dadurch gekennzeichnet, daß die Haupt-Energieabgabeeinrichtung (4, 17) und/oder die Zusatz-Energieabgabeeinrichtung (5, 16) eine Energiequelle (4 bzw. 16), insbesondere eine wiederaufladbare Batterie, aufweist, zu der ein weiteres Schaltmittel (17) in Reihe geschaltet ist.

10. Anordnung und Verfahren nach einem der Ansprüche 5 bis 9, dadurch gekennzeichnet, daß die Nennspannung der Zusatz-Energieabgabeeinrichtung (5, 16) wesentlich geringer ist als die Nennspannung der Haupt-Energieabgabeeinrichtung (4, 17).

11. Anordnung und Verfahren nach einem der vorhergehenden Ansprüche, dadurch gekennzeichnet, daß die Energie-Rückspeisungsanordnung (6, 7, 14, 15, 41, 42) das erste Schaltmittel (2, 3, 12, 13, 39, 40) überbrückt.

12. Anordnung und Verfahren nach einem der vorhergehenden Ansprüche, dadurch gekennzeichnet, daß die Schaltmittel (2, 3, 8, 12, 13, 17, 39, 40) als Halbleiterschalter ausgebildet sind und von einem Steuermodul (10) aus steuerbar sind.

13. Anordnung und Verfahren nach einem der vorhergehenden Ansprüche, dadurch gekennzeichnet, daß das Stellglied (1, 11, 18) ein Elektromotor (11, 18) ist.

14. Anordnung und Verfahren nach Anspruch 13, dadurch gekennzeichnet, daß der Elektromotor (11) ein Gleichstrommotor mit einem Anker, einem Kommutator und zwei elektrischen Anschlüssen ist.

15. Anordnung und Verfahren nach Anspruch 13, dadurch gekennzeichnet, daß der Elektromotor (18) eine Mehrzahl von Erregerwicklungen (35, 36, 43, 44, 45) aufweist, die über elektrische Anschlüsse mit elektrischer Energie beaufschlagbar sind.

16. Anordnung und Verfahren nach Anspruch 13, dadurch gekennzeichnet, daß der Elektromotor (18) ein geschalteter Reluktanzmotor ist.

17. Anordnung und Verfahren nach einem der Ansprüche 15 oder 16, dadurch gekennzeichnet, daß für das stufenweise Sammeln des Energievorrats in dem Energiespeicher (9) das erste Schaltmittel (2, 3, 12, 13, 39, 40) derart betätigt wird, daß diejenige Erregerwicklung (35, 36, 43, 44, 45) des Elektromotors (18) mit der Energieabgabeeinrichtung (4, 5, 16, 17) verbunden wird, deren Statorpole (21, 22, 23, 24, 31, 32, 33, 34) den Rotorpolen (25, 26, 27, 28, 29, 30) am nächsten stehen.

18. Anordnung und Verfahren nach einem der Ansprüche 15 oder 16, dadurch gekennzeichnet, daß für das stufenweise Sammeln des Energievorrats in dem Energiespeicher (9) das erste Schaltmittel (2, 3, 12, 13, 39, 40) derart betätigt wird, daß mehrere oder alle Erregerwicklungen (35, 36, 43, 44, 45) des Elektromotors (18) gleichzeitig mit der Energieabgabeeinrichtung (4, 5, 16, 17) verbunden werden.

19. Anordnung und Verfahren nach einem der vorhergehenden Ansprüche, dadurch gekennzeichnet, daß das Stellglied (1, 11, 18) ein Elektromagnet ist.

20. Anordnung und Verfahren nach Anspruch 19, dadurch gekennzeichnet, daß der Elektromagnet in einem Magnetventil angeordnet ist.

21. Verfahren zur Überprüfung einer Schaltungsanordnung nach einem der Ansprüche 9 bis 20, wobei die Haupt-Energieabgabeeinrichtung (4, 17) eine Energiequelle (4), insbesondere eine wiederaufladbare Batterie, aufweist, zu der ein weiteres Schaltmittel (17) in Reihe geschaltet ist, dadurch gekennzeichnet, daß bei fehlerfreiem Zustand der Energiequelle (4) nach Art eines Testzyklus das weitere Schaltmittel (17) vorübergehend geöffnet wird und währenddessen durch wechselweises Öffnen und Schließen der ersten (2, 3, 12, 13, 39, 40) und der zweiten (8) Schaltmittel stufenweise ein für eine Überprüfung der Schaltungsanordnung erwünschter Energievorrat in dem Energiespeicher (9) gesammelt wird.
